# EUROPEAN PATENT APPLICATION

(11) **EP 4 645 214 A1**
(43) Date of publication of application: **05.11.2025**
(21) Application number: 22970185.9
(22) Date of filing: 28.12.2022
(51) Int. Cl.: G06T 7/00, G06V 40/40

(54) **INFORMATION PROCESSING DEVICE, INFORMATION PROCESSING SYSTEM, INFORMATION PROCESSING METHOD, AND RECORDING MEDIUM**

(71) Applicant: NEC Corporation, 108-8001 Tokyo (JP)
(72) Inventor: ARAKI, Toshinori, Tokyo 108-8001 (JP); KAKIZAKI, Kazuya, Tokyo 108-8001 (JP); BUSSAKI, Masahiro, Tokyo 108-8001 (JP); AMADA, Takuma, Tokyo 108-8001 (JP)
(74) Representative: Betten & Resch
(86) International application number: PCT/JP2022/048649
(87) International publication number: WO 2024/142398

(57) **Abstract**

An information processing apparatus includes: a masking unit that masks at least a part of a target between the target and an image capture unit that captures images of the target; an acquisition unit that acquires a masked video in which at least a part of the target is masked by the masking unit; a detection unit that detects distortion in the masked video; and a determination unit that determines whether or not the masked video is a synthesized video, based on a detection result of the detection unit.

## Description

### Technical Field

This disclosure relates to technical fields of an information processing apparatus, an information processing system, an information processing method, and a recording medium.

### Background Art

Patent Literature 1 describes a technology/technique of performing personal authentication, by passing a laser through a masking plate having a plurality of horizontal slits to project grid-like laser spots onto the ball of a finger, aligning the horizontal spots with scanning lines of a camera, analyzing data on the spots, and detecting a blood flow distribution on the surface of the finger and its change over time, or by analyzing data between the spots to investigate an internal blood flow distribution and its change over time, and comparing and determining these data with a predetermined reference.

Patent Literature 2 describes a technology/technique of: recording access to an external network by a client terminal; associating and registering face information on each user with user notification destination information; extracting verification data including video data from content at a recorded access destination; collating the extracted verification data with the face information to determine whether or not the verification data include the face information; and outputting a notification to a user based on notification destination information corresponding to the face information, when the verification data include the face information.

Patent Literature 3 describes a technology/technique in which a skin is irradiated with irradiation light from a light source, with its vibration direction restricted in one direction by an irradiation unit polarizing plate, in which a light receiving unit polarizing plate disposed in an imaging optical system is configured such that its vibration direction is perpendicular to that of a projection unit polarizing plate, and in which a vibration direction of simple reflection light from an epidermal tissue is perpendicular to that of the light receiving unit polarizing plate and is blocked by the light receiving unit polarizing plate.

### Citation List

### Patent Literature

Patent Literature 1: International Publication No. WO2009/122931
Patent Literature 2: JP2021-193635A
Patent Literature 3: JP2012-164357A

### Summary

### Technical Problem

It is an example object of this disclosure to provide an information processing apparatus, an information processing system, an information processing method, and a recording medium that are intended to improve the techniques/technologies disclosed in Citation List.

### Solution to Problem

An information processing apparatus according to an example aspect includes: a masking unit that masks at least a part of a target between the target and an image capture unit that captures images of the target; an acquisition unit that acquires a masked video in which at least a part of the target is masked by the masking unit; a detection unit that detects distortion in the masked video; and a determination unit that determines whether or not the masked video is a synthesized video, based on a detection result of the detection unit.

An information processing system according to an example aspect includes: an information processing apparatus, including: a masking unit that masks at least a part of a target between the target and an image capture unit that captures images of the target; an acquisition unit that acquires a masked video in which at least a part of the target is masked by the masking unit; a detection unit that detects distortion in the masked video; and a determination unit that determines whether or not the masked video is a synthesized video, based on a detection result of the detection unit; a verification unit that verifies the masked video; an impersonation determining unit that determines whether or not the target is impersonating someone else, by using the masked video; and an authentication unit that authenticates the target, based on at least one of a determination result of the determination unit, a determination result of the impersonation determining unit, and a verification result of the verification unit.

An information processing method according to an example aspect includes: masking at least a part of a target between the target and an image capture unit that captures images of the target; acquiring a masked video in which at least a part of the target is masked; detecting distortion in the masked video; and determining whether or not the masked video is a synthesized video, based on a detection result.

A recording medium according to an example aspect is a recording medium on which a computer program that allows a computer to execute an information processing method is recorded, the information processing method including: masking at least a part of a target between the target and an image capture unit that captures images of the target; acquiring a masked video in which at least a part of the target is masked; detecting distortion in the masked video; and determining whether or not the masked video is a synthesized video, based on a detection result.

### Brief Description of Drawings

[FIG. 1] FIG. 1 is a block diagram illustrating a configuration of an information processing apparatus in a first example embodiment.
[FIG. 2] FIG. 2 is a block diagram illustrating a configuration of an information processing apparatus in a second example embodiment.
[FIG. 3] FIG. 3 is a flowchart illustrating a flow of an information processing operation of the information processing apparatus in the second example embodiment.
[FIG. 4] FIG. 4 is a block diagram illustrating a configuration of an information processing apparatus in a third example embodiment.
[FIG. 5] FIG. 5 is a flowchart illustrating a flow of the information processing operation of the information processing apparatus in the third example embodiment.

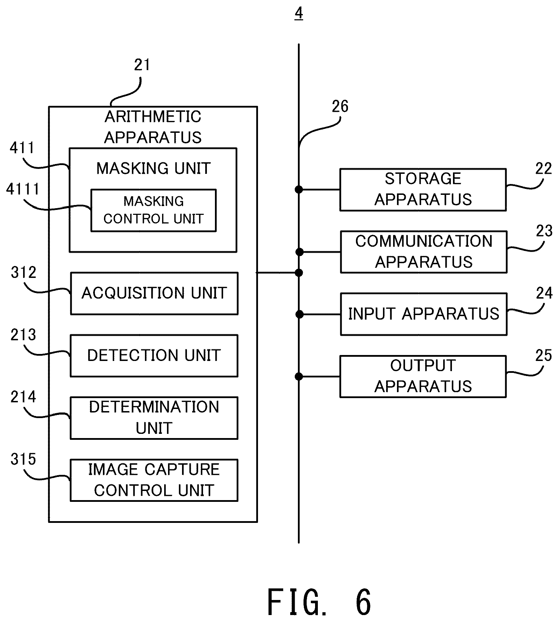

[FIG. 6] FIG. 6 is a block diagram illustrating a configuration of an information processing apparatus in a fourth example embodiment.
[FIG. 7] FIG. 7 is a block diagram illustrating a configuration of an information processing apparatus in a fifth example embodiment.
[FIG. 8] FIG. 8 is a flowchart illustrating a flow of the information processing operation of the information processing apparatus in the fifth example embodiment.
[FIG. 9] FIG. 9 is a block diagram illustrating a configuration of an information processing system in a sixth example embodiment.
[FIG. 10] FIG. 10 is a flowchart illustrating a flow of the information processing operation of the information processing system in the sixth example embodiment.

### Description of Example Embodiments

Hereinafter, with reference to the drawings, an information processing apparatus, an information processing system, an information processing method, and a recording medium according to example embodiments will be described.

### [1: First Example Embodiment]

An information processing apparatus, an information processing system, an information processing method, and a recording medium according to a first example embodiment will be described. The following describes the information processing apparatus, the information processing system, the information processing method, and the recording medium according to the first example embodiment, by using an information processing apparatus 1 to which the information processing apparatus, the information processing system, the information processing method, and the recording medium according to the first example embodiment are applied.

### [1-1: Configuration of Information Processing Apparatus 1]

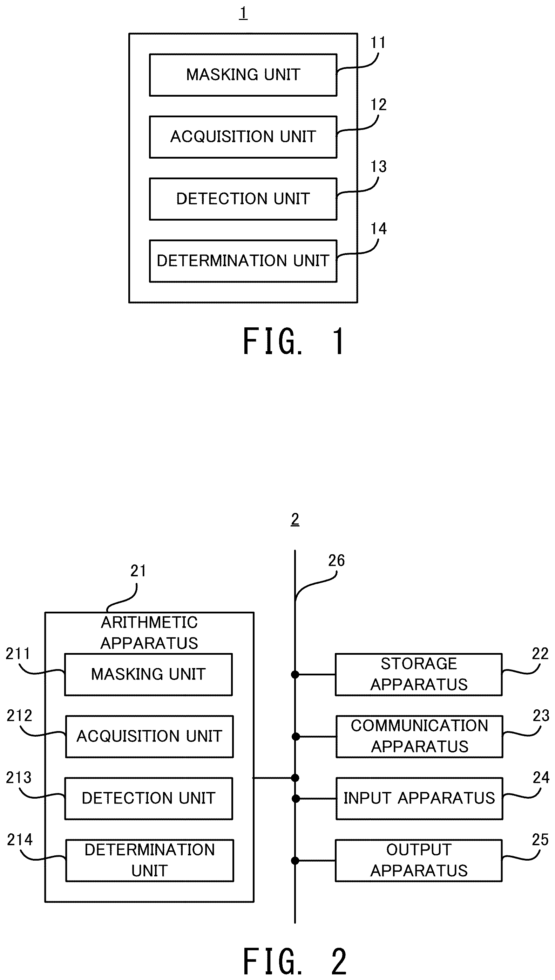

FIG. 1 is a block diagram illustrating a configuration of the information processing apparatus 1 in the first example embodiment. As illustrated in FIG. 1, the information processing apparatus 1 includes a masking unit 11, an acquisition unit 12, a detection unit 13, and a determination unit 14.

The masking unit 11 masks at least a part of a target between the target and an image capture unit that captures images of the target. The acquisition unit 12 acquires a masked video in which at least a part of the target is masked by the masking unit 11. The detection unit 13 detects distortion in the masked video. The determination unit 14 determines whether or not the masked video is a synthesized video, based on a detection result of the detection unit 13.

### [1-2: Technical Effect of Information Processing Apparatus 1]

The information processing apparatus 1 in the first example embodiment determines whether or not the masked video is a synthesized video, based on the detection result of the distortion in the masked video in which at least a part of the target is masked, thereby enabling accurate determination of whether or not the masked video is a synthesized video.

### [2: Second Example Embodiment]

Next, an information processing apparatus, an information processing system, an information processing method, and a recording medium according to a second example embodiment will be described. The following describes the information processing apparatus, the information processing system, the information processing method, and the recording medium according to the second example embodiment, by using an information processing apparatus 2 to which the information processing apparatus, the information processing system, the information processing method, and the recording medium according to the second example embodiment are applied.

### [2-1: Fake Video]

There are techniques/technologies for synthesizing an image of a person, based on information from a single facial photograph of the person. For an example of the techniques/technologies for synthesizing an image of a person, deepfake is well known. Deepfake is known for a technique/technology for synthesizing a fake video that depicts an event that does not actually occur. Hereinafter, a video that depicts an event that does not actually occur, may be referred to as a fake video. Additionally, videos depicting events that actually occurs, may be referred to as a real video or authentic video. For example, the real video may include a video that depicts an action performed in front of a camera by a person B who is being captured by the camera. In contrast, the fake video may include a video synthesized as if the action performed in front of the camera by the person B who is being captured by the camera were performed by a different person A from the person B.

There is a technique/technology, called "reenactment", for generating a fake video in which the expression of a person in an original image changes to a desired expression, or a person in an original image faces a desired direction. For example, there is a known a technique/technology for generating a video in which, based on at least one facial image of the person A, the expression of the person A in the facial image is changed to match the expression of the person B, as if the person A were changing the expression (hereinafter sometimes referred to as "conversion of a still image into a video").

By using an original image and an original video, it is possible to convert a still image into a video. The original video may be, for example, a video that depicts the action performed in front of the camera by the person B who is being captured by the camera. The original image may also be a still image in which the person A, who is different from the person B, is captured. In the conversion of a still image into a video, first, landmarks of the original image are detected. Furthermore, landmarks are detected from each of video frames that constitute the original video. Then, for each of the video frames that constitute the original video, the original image is edited to match the landmarks of the original image with the landmarks of the corresponding video frame, thereby generating a synthetic frame. By connecting the generated synthetic frames, the still image may be converted into a video. The landmarks may be characteristic positions of a subject in an image.

For example, it is possible to change a direction, expression, or the like of a face of the person A captured in the original image, by using the landmarks of a face of the person B captured in the original video, thereby synthesizing a video in which the direction, expression, or the like of the face of the person A are changed. The landmarks used to change the direction, expression, or the like of the face of the person may be characteristic parts of the face. Characteristic positions on the face may be specific points of the parts such as the eyes, a nose, and a mouth.

When a fake video is generated by using the landmarks, if there is a masking object in front of the face, the landmarks may not be detected sufficiently, making it hard to generate the fake video. Therefore, the generated fake video may be of poor quality, such as easily visible traces of image editing.

In the present example embodiment, this property is used to determine whether or not a video is fake. That is, a fake video is detected by using a mechanism that determines whether or not a video is fake, based on the presence of a masking object that is located to partially hide the face between the camera and the target from which the landmarks are acquired.

### [2-2: Configuration of Information Processing Apparatus 2]

FIG. 2 is a block diagram illustrating a configuration of the information processing apparatus 2 in the second example embodiment. As illustrated in FIG. 2, the information processing apparatus 2 includes an arithmetic apparatus 21 and a storage apparatus 22. Furthermore, the information processing apparatus 2 may include a communication apparatus 23, an input apparatus 24, and an output apparatus 25. The information processing apparatus 2, however, may not include at least one of the communication apparatus 23, the input apparatus 24, and the output apparatus 25. The arithmetic apparatus 21, the storage apparatus 22, the communication apparatus 23, the input apparatus 24, and the output apparatus 25 may be connected via a data bus 26.

The arithmetic apparatus 21 includes, for example, at least one of a CPU (Central Processing Unit), a GPU (Graphics Processing Unit), and a FPGA (Field Programmable Gate Array). The arithmetic apparatus 21 reads a computer program. For example, the arithmetic apparatus 21 may read a computer program stored in the storage apparatus 22. For example, the arithmetic apparatus 21 may read a computer program stored in a computer-readable and non-transitory recording medium, by using a not-illustrated recording medium reading apparatus provided in the information processing apparatus 2 (e.g., the input apparatus 24 described later). The arithmetic apparatus 21 may acquire (i.e., download or read) a computer program from a not-illustrated apparatus disposed outside the information processing apparatus 2, via the communication apparatus 23 (or another communication apparatus). The arithmetic apparatus 21 executes the read computer program. Consequently, a logical function block for performing an operation to be performed by the information processing apparatus 2 is realized in the arithmetic apparatus 21. That is, the arithmetic apparatus 21 is allowed to function as a controller for realizing the logical functional block for performing an operation (or, in other words, processing) to be performed by the information processing apparatus 2.

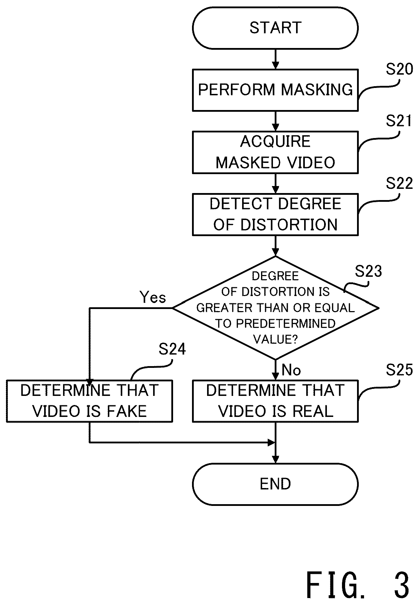

FIG. 2 illustrates an example of the logical function block realized in the arithmetic apparatus 21 in order to perform an information processing operation. As illustrated in FIG. 2, a masking unit 211 that is a specific example of the "masking unit" described in Supplementary Notes later, an acquisition unit 212 that is a specific example of the "acquisition unit" described in Supplementary Notes later, a detection unit 213 that is a specific example of the "detection unit" described in Supplementary Notes later, and a determination unit 214 that is a specific example of the "determination unit" described in Supplementary Notes later, are realized in the arithmetic apparatus 21. Details of operation of each of the masking unit 211, the acquisition unit 212, the detection unit 213, and the determination unit 214 will be described later with reference to FIG. 3.

The storage apparatus 22 is configured to store desired data. For example, the storage apparatus 22 may temporarily store a computer program to be executed by the arithmetic apparatus 21. The storage apparatus 22 may temporarily store data that are temporarily used by the arithmetic apparatus 21 when the arithmetic apparatus 21 executes the computer program. The storage apparatus 22 may store data that are stored for a long time by the information processing apparatus 2. The storage apparatus 22 may include at least one of a random access memory (RAM), a read-only memory (ROM), a hard disk apparatus, a magneto-optical disk apparatus, a solid state drive (SSD), and a disk array apparatus. That is, the storage apparatus 22 may include a non-transitory recording medium.

The communication apparatus 23 is configured to communicate with an apparatus external to the information processing apparatus 2 via a not-illustrated communication network. The communication apparatus 23 may be a communication interface based on standards such as Ethernet (registered trademark), Wi-Fi (registered trademark), Bluetooth (registered trademark), and USB (Universal Serial Bus).

The input apparatus 24 is an apparatus that receives an input of information to the information processing apparatus 2 from an outside of the information processing apparatus 2. For example, the input apparatus 24 may include an operating apparatus (e.g., at least one of a keyboard, a mouse, and a touch panel) that is operable by an operator of the information processing apparatus 2. For example, the input apparatus 24 may include a reading apparatus that is configured to read information recorded as data on a recording medium that is externally attachable to the information processing apparatus 2.

The output apparatus 25 is an apparatus that outputs information to the outside of the information processing apparatus 2. For example, the output apparatus 25 may output information as an image. That is, the output apparatus 25 may include a display apparatus (a so-called display) that is configured to display an image indicating the information that is desirably outputted. That is, in the second example embodiment, the information processing apparatus 2 includes a display D as the output apparatus 25. For example, the output apparatus 25 may output information as audio/sound. That is, the output apparatus 25 may include an audio apparatus (a so-called speaker) that is configured to output audio/sound. For example, the output apparatus 25 may output information onto a paper surface. That is, the output apparatus 25 may include a printing apparatus (a so-called printer) that is configured to print desired information on the paper surface.

### [2-3: Information Processing Operation Performed by Information Processing Apparatus 2]

With reference to FIG. 3, the information processing operation performed by the information processing apparatus 2 will be described. FIG. 3 is a flowchart illustrating a flow of the information processing operation performed by the information processing apparatus 2.

As illustrated in FIG. 3, the masking unit 211 masks at least a part of a target person between the target person and the camera that captures images of the target person (step S20). The masking unit 211 may hide a part including landmarks of the target person. The camera may capture a video including a face area of the target person. A masking target of the masking unit 211 may be the face area of the target person. In this case, the landmarks may be characteristic parts of the face. Characteristic positions on the face may be specific points of the parts such as the eyes, nose, and mouth.

As described above, in case a fake image is generated, it is common to edit the original image by using the landmarks of the original image and the landmarks of each of the video frames that constitute the original video, thereby generating a synthetic frame. In a case where a part including the landmarks of the target person is masked between the target person providing the landmarks and the camera that captures images of the target person, the landmarks in the hidden part may not be acquired. Therefore, when the part including the landmarks of the target person is masked, a fake video with distortion is easily generated. The fake video with distortion refers to an incomplete video or an unnatural video. Therefore, the information processing apparatus 2 in the present example embodiment, detects the distortion in the masked video in which at least a part of the target person is hidden between the target person and the camera that captures images of the target person, and determines whether or not the masked video is a synthesized video.

The acquisition unit 212 acquires the masked video in which at least a part of the target person is hidden by the masking unit 211 (step S21).

The detection unit 213 detects the distortion in the masked video (step S22). The detection unit 213 may detect, for example, that the target person have two sets of eyebrows, or that the target person has a distorted bridge of nose. The detection unit 213 may detect a degree of distortion in the masked video.

The determination unit 214 determines whether or not the degree of distortion in the masked video is greater than or equal to a predetermined level (step S23). When the degree of distortion in the masked video is greater than or equal to the predetermined level, the determination unit 214 determines that the acquired masked video is a fake video (step S24). When the degree of distortion in the masked video is less than the predetermined level, the determination unit 214 determines that the acquired masked video is a real video (step S25). That is, the determination unit 214 determines whether or not the masked video is a synthesized video, based on a detection result of the detection unit 213.

### [2-4: Technical Effect of Information Processing Apparatus 2]

The information processing apparatus 2 in the second example embodiment is capable of determining whether or not a video is fake, by detecting an effect/influence of the landmarks of the target person being hidden. The information processing apparatus 2 is capable of accurately determining whether or not a video is real or fake, by evaluating the effect/influence of the landmarks of the target person being hidden. The information processing apparatus 2 is capable of determining whether or not a video is real or fake, from a state around the masking object in the image.

### [3: Third Example Embodiment]

Next, an information processing apparatus, an information processing system, an information processing method, and a recording medium according to a third example embodiment will be described. The following describes the information processing apparatus, the information processing system, the information processing method, and the recording medium according to the third example embodiment, by using an information processing apparatus 3 to which the information processing apparatus, the information processing system, the information processing method, and the recording medium according to the third example embodiment are applied.

### [3-1: Configuration of Information Processing Apparatus 3]

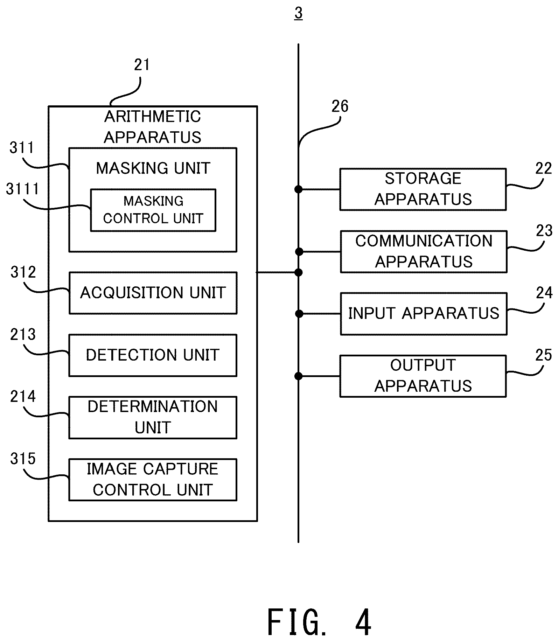

As illustrated in FIG. 4, the information processing apparatus 3 in the third example embodiment includes the arithmetic apparatus 21 and the storage apparatus 22, as in the information processing apparatus 2 in the second example embodiment. Furthermore, the information processing apparatus 3 in the third example embodiment may include the communication apparatus 23, the input apparatus 24, and the output apparatus 25, as in the information processing apparatus 2 in the second example embodiment. The information processing apparatus 3, however, may not include at least one of the communication apparatus 23, the input apparatus 24, and the output apparatus 25. The information processing apparatus 3 in the third example embodiment differs from the information processing apparatus 2 in the second example embodiment, in that an image capture control unit 315 is further realized in the arithmetic apparatus 21 and that a masking unit 311 includes a masking control unit 3111. Other features of the information processing apparatus 3 may be the same as those of the information processing apparatus 2 in the second example embodiment. For this reason, a part differing from each of the example embodiments described above will be described in detail below, and a description of the other overlapping parts will be omitted as appropriate.

### [3-2: Information Processing Operation Performed by Information Processing Apparatus 3]

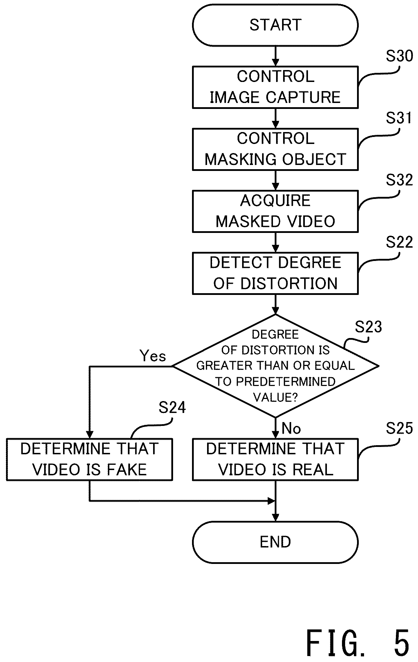

With reference to FIG. 5, the information processing operation performed by the information processing apparatus 3 will be described. FIG. 5 is a flowchart illustrating a flow of the information processing operation performed by the information processing apparatus 3.

As illustrated in FIG. 5, the image capture control unit 315 controls the camera to capture a video of the target person (step S30). The masking control unit 3111 causes the masking object that hides at least a part of the target person to appear between the target person and the camera (step S31). The masking control unit 3111 may cause a plurality of masking objects to appear.

The information processing apparatus 3 in the third example embodiment realizes the acquisition of the masked video in which at least a part of the target person is hidden, by controlling image capture by the camera and the appearance of the masking object. The information processing operation in the third example embodiment may be performed in a specific environment. The information processing operation in the third example embodiment may be performed in an environment in which there are provided a camera to be controlled by the information processing apparatus 3 and a masking object appearance mechanism to be controlled by the information processing apparatus 3.

The camera to be controlled by the information processing apparatus 3 in the third example embodiment may be a specific camera. Between the target person and the camera may refer to between the target person and an imaging area of the camera. The masking control unit 3111 may cause the masking object to appear at a predetermined position relative to the imaging area in the camera. The masking control unit 3111 may cause a filter or the like to appear at a predetermined position relative to the imaging area in the camera. The masking object may be a mechanism that blocks the reception of light from the landmarks at the imaging area.

The acquisition unit 312 acquires the masked video in which the masking object caused to appear by the masking control unit 3111 is captured (step S32). When the acquisition unit 312 acquires the masked video, it may not be detected whether the masked video is an unedited video as captured by the camera, or an edited video of the video captured by the camera.

The detection unit 213 detects the distortion in the masked video (step S22). The determination unit 214 determines whether or not the degree of distortion in the masked video is greater than or equal to a predetermined level (step S23). When the degree of distortion in the masked video is greater than or equal to the predetermined level, the determination unit 214 determines that the acquired masked video is a fake video (step S24). When the degree of distortion in the masked video is less than the predetermined level, the determination unit 214 determines that the acquired masked video is a real video (step S25).

### [3-3: Technical Effect of Information Processing Apparatus 3]

The information processing apparatus 3 in the third example embodiment controls the appearance of the masking object and allows the image capture of the masked video in which at least a part of the target is hidden. In particular, in a case where the masking object is caused to appear at a predetermined position relative to the imaging area of the camera, the information processing apparatus 3 allows the image capture of the masked video in which at least a part of the target is hidden, without making the target person aware that at least a part of the target person is hidden.

### [4: Fourth Example Embodiment]

Next, an information processing apparatus, an information processing system, an information processing method, and a recording medium according to a fourth example embodiment will be described. The following describes the information processing apparatus, the information processing system, the information processing method, and the recording medium according to the fourth example embodiment, by using an information processing apparatus 4 to which the information processing apparatus, the information processing system, the information processing method, and the recording medium according to the fourth example embodiment are applied.

### [4-1: Information Processing Operation Performed by Information Processing Apparatus 4]

In the step S31 in FIG. 5, in the fourth example embodiment, a masking unit 411 masks an area hidden by the masking object to be different in each of the video frames that constitutes the masked video. The masking unit 411 may change the hidden area hidden by the masking object in the video frames that constitutes the masked video. The masking unit 411 may change the position of the masked area. The masking unit 411 may change the shape of the masked area. The masking unit 411 may cause a plurality of masking objects to appear, and may change the number of the masking objects caused to appear.

The masking unit 411 may randomly change the hidden area. When the hidden area hidden by the masking object is constant, a technique of not causing the distortion even when the constant part is hidden, may be used to generate a fake video. In the third example embodiment, the hidden area hidden by the masking object is changed. Randomly changing the masked area makes it easier to detect the distortion in the fake video. The masking unit 411 may randomly change the position of the hidden area. The masking unit 411 may randomly change the shape of the hidden area. The masking unit 411 may randomly change the number of masking objects caused to appear. The masking unit 411 may prepare a plurality of types of masking objects in advance, and may randomly select the prepared masking objects.

### [4-2: Technical Effect of Information Processing Apparatus 4]

The information processing apparatus 4 in the fourth example embodiment is capable of making it harder to create a fake video that is hardly distinguished from a real video.

### [5: Fifth Example Embodiment]

Next, an information processing apparatus, an information processing system, an information processing method, and a recording medium according to a fifth example embodiment will be described. The following describes the information processing apparatus, the information processing system, the information processing method, and the recording medium according to the fifth example embodiment, by using an information processing apparatus 5 to which the information processing apparatus, the information processing system, the information processing method, and the recording medium according to the fifth example embodiment are applied.

### [5-1: Configuration of Information Processing Apparatus 5]

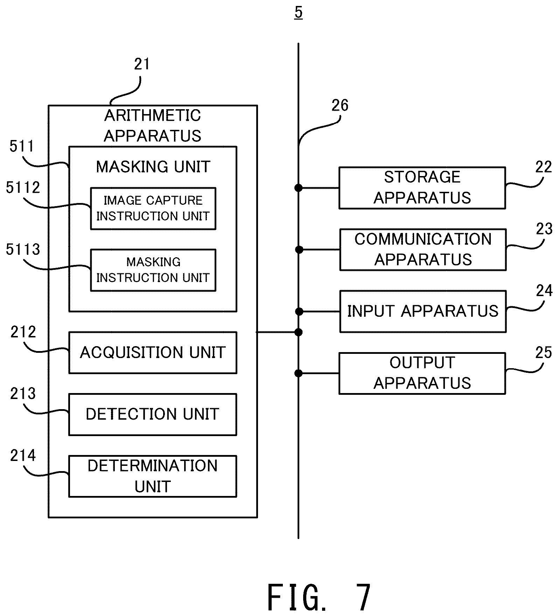

As illustrated in FIG. 7, the information processing apparatus 5 in the fifth example embodiment includes the arithmetic apparatus 21 and the storage apparatus 22, as in the information processing apparatus 2 in the second example embodiment to the information processing apparatus 4 in the fourth example embodiment. Furthermore, the information processing apparatus 5 in the fifth example embodiment may include the communication apparatus 23, the input apparatus 24, and the output apparatus 25, as in the information processing apparatus 2 in the second example embodiment to the information processing apparatus 4 in the fourth example embodiment. The information processing apparatus 5, however, may not include at least one of the communication apparatus 23, the input apparatus 24, and the output apparatus 25. The information processing apparatus 5 in the fifth example embodiment differs from the information processing apparatus 2 in the second example embodiment to the information processing apparatus 4 in the fourth example embodiment, in that a masking unit 511 includes an image capture instruction unit 5112 and a masking instruction unit 5113. Other features of the information processing apparatus 5 may be the same as those of at least one of the information processing apparatus 2 in the second example embodiment to the information processing apparatus 4 in the fourth example embodiment. For this reason, a part differing from each of the example embodiments described above will be described in detail below, and a description of the other overlapping parts will be omitted as appropriate.

### [5-2: Information Processing Operation Performed by Information Processing Apparatus 5]

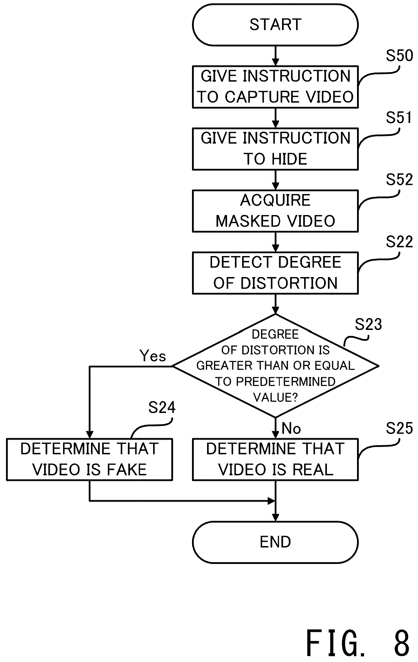

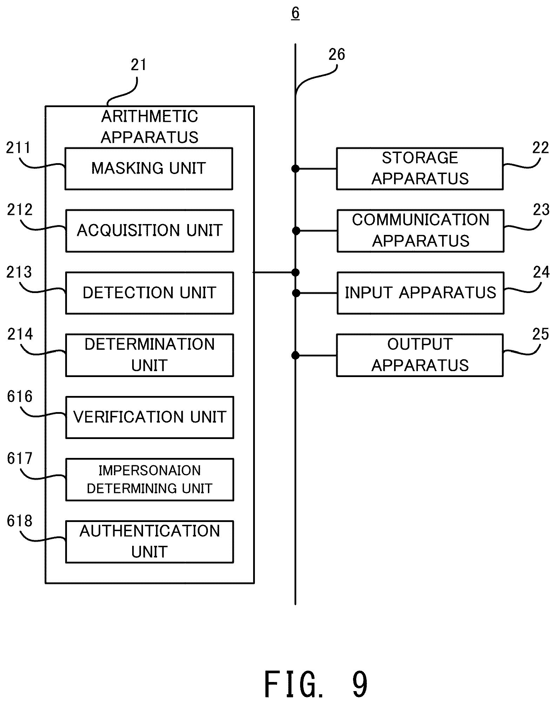

With reference to FIG. 8, the information processing operation performed by the information processing apparatus 5 will be described. FIG. 9 is a flowchart illustrating a flow of the information processing operation performed by the information processing apparatus 5.

As illustrated in FIG. 8, the image capture instruction unit 5112 instructs the target person to capture a video of the target person by using the camera (step S50). The masking instruction unit 5113 instructs the target person to perform an action of masking at least a part of the target person (step S51). The masking instruction unit 5113 may instruct the target person to perform such an action as covering a mouth with a right hand and covering a left eye with a left hand. The image capture instruction unit 5112 and the masking instruction unit 5113 may give instructions to the target person, via display on a screen, audio output from a speaker, or other means. In the fifth example embodiment, the camera may be a web camera.

An acquisition unit 512 acquires the masked video in which the target person hides at least a part of the target person himself, in response to the instruction from the masking instruction unit 5113 (step S52). When the acquisition unit 512 acquires the masked video, it may not be detected whether the masked video is an unedited video as captured by the camera, or an edited video of the video captured by the camera.

The detection unit 213 detects the distortion in the masked video (step S22). The determination unit 214 determines whether or not the degree of distortion in the masked video is greater than or equal to a predetermined level (step S23). When the degree of distortion in the masked video is greater than or equal to the predetermined level, the determination unit 214 determines that the acquired masked video is a fake video (step S24). When the degree of distortion in the masked video is less than the predetermined level, the determination unit 214 determines that the acquired masked video is a real video (step S25).

### [5-3: Technical Effect of Information Processing Apparatus 5]

The information processing apparatus 5 in the fifth example embodiment is capable of acquiring the masked video in which at least a part of the target person is hidden, without preparing a specific environment for causing the masking object to appear.

### [6: Sixth Example Embodiment]

Next, an information processing apparatus, an information processing system, an information processing method, and a recording medium according to a sixth example embodiment will be described. The following describes the information processing apparatus, the information processing system, the information processing method, and the recording medium according to the sixth example embodiment, by using an information processing system 6 to which the information processing apparatus, the information processing system, the information processing method, and the recording medium according to the sixth example embodiment are applied.

### [6-1: Electronic Know Your Customer]

The use of online identity verification, such as electronic Know Your Customer (eKYC), is increasing. In many cases, identity verification for opening bank accounts and issuing credit cards is performed online using eKYC, rather than in person.

eKYC may be performed at an image capture location prepared for eKYC services, for example. Furthermore, eKYC may be performed at any location by using a terminal apparatus that is usable by the target person, such as a smartphone equipped with an image capture function and a communication function.

An example of an eKYC flow will be described below.

(step 1) Still image capture: Capture one side of a facial photograph on an identification document such as a driver's license and My Number card in Japan. The other side of the identification document and the thickness of the identification document may also be captured.

(step 2) Video capture: Give instructions on such an action as facing forward and then turning to the right, thereby capturing images of an actual person performing the action.

(step 3) Facial image verification: Perform verification on whether or not a target person in the facial photograph on the identification document and a target person in front of the camera are the same person. In the facial image verification, a feature quantity is extracted from the facial photograph, a feature quantity is extracted from a face area detected from a video, and the extracted feature quantities are compared to determine whether a degree of similarity between the feature quantities is greater than or equal to a predetermined value.

(step 4) Impersonation determination: Determines whether the target person is impersonating someone else, based on a response to the instructions on the action.

(step 5) Authentication of identity: Determines whether or not identity verification is successful, based on results of the steps 3 and 4.

As described above, there are techniques/technologies for synthesizing an image of a person, based on information from a single facial photograph of the person, which poses a threat of impersonation in eKYC. Accurate determination of whether or not a video is fake, is an important issue for enhancing the reliability of services such as eKYC. An input to eKYC includes a facial image on an official document that may be information for synthesizing a fake video. That is, as an impersonation/spoofing attack against eKYC, it is conceivable to synthesize and input a fake video, based on limited information like a facial image on an official document such as a driver's license and My Number card in Japan.

The information processing system 6 in the sixth example embodiment may be applied to online identity verification such as eKYC.

### [6-2: Configuration of Information Processing System 6]

As illustrated in FIG. 9, the information processing system 6 in the sixth example embodiment includes the arithmetic apparatus 21 and the storage apparatus 22, as in the information processing apparatus 2 in the second example embodiment to the information processing apparatus 5 in the fifth example embodiment. Furthermore, the information processing system 6 in the sixth example embodiment may include the communication apparatus 23, the input apparatus 24, and the output apparatus 25, as in the information processing apparatus 2 in the second example embodiment to the information processing apparatus 5 in the fifth example embodiment. The information processing system 6, however, may not include at least one of the communication apparatus 23, the input apparatus 24, and the output apparatus 25. The information processing system 6 in the sixth example embodiment differs from the information processing apparatus 2 in the second example embodiment to the information processing apparatus 5 in the fifth example embodiment, in that a verification unit 616, an impersonation determining unit 617, and an authentication unit 618 are further realized in the arithmetic apparatus 21. Other features of the information processing system 6 may be the same as those of at least one of the information processing apparatus 2 in the second example embodiment to the information processing apparatus 5 in the fifth example embodiment. For this reason, a part differing from each of the example embodiments described above will be described in detail below, and a description of the other overlapping parts will be omitted as appropriate.

The information processing system 6 may be a system that is configured to perform biometric authentication of the target person. The information processing system 6 may be an apparatus that performs a verification operation using images and that determines whether or not the target person is impersonating someone else by using images, thereby authenticating the target person.

### [6-3: Information Processing Operation Performed by Information Processing System 6]

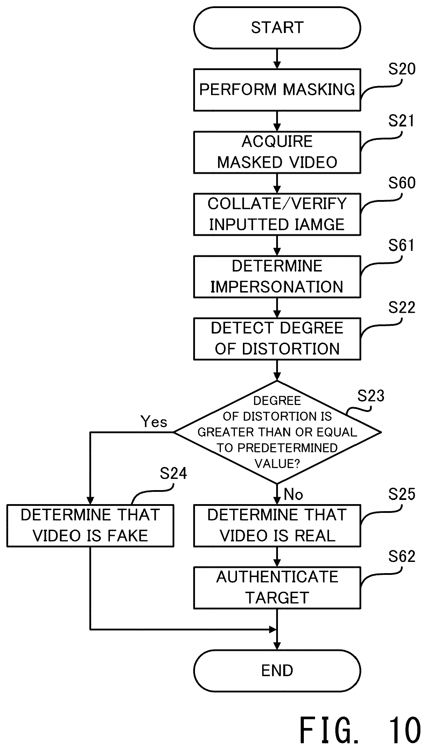

With reference to FIG. 10, the information processing operation performed by the information processing system 6 will be described. FIG. 10 is a flowchart illustrating a flow of the information processing operation performed by the information processing system 6.

As illustrated in FIG. 10, the masking unit 211 masks at least a part of a target person between the target person and the camera that captures images of the target person (step S20). The acquisition unit 212 acquires the masked video in which at least a part of the target person is hidden by the masking unit 211. The acquisition unit 212 may also acquire a video in which at least a part of the target person is not hidden by the masking unit 211 (step S21). The step S21 may correspond to the step 2 in an example of the eKYC flow described above.

The verification unit 616 verifies the video (step S60). This video may be the masked video or the video in which at least a part of the target person is not hidden by the masking unit 211. The verification unit 616 may acquire a facial image from an official document such as a driver's license or a My Number card in Japan. This may correspond to the step 1 in an example of the eKYC flow described above. In a case where the official document is a My Number Card, the verification unit 616 may acquire the facial image stored in an integrated circuit incorporated in the My Number Card. The verification unit 616 may acquire the facial image in the My Number Card read by using a short-range wireless communication function installed in a smartphone carried by the target person, for example. The verification unit 616 may verify the facial image on the official document such as such as a driver's license or a My Number card in Japan, with the target person captured in the video. Alternatively, the verification unit 616 may verify the acquired video with a registered facial image registered in advance. In a case of a failure in the verification of the target person captured in the video, the information processing operation may be ended. The step S60 may correspond to the step 3 in an example of the eKYC flow described above. Note that in a case where a verification target in the step S60 is not the masked video, the operation in the step S20 and the operation of acquiring the masked video in the step S21 may be performed after the step S60.

The impersonation determining unit 617 performs impersonation determination by using the masked video (step S61). In the sixth example embodiment, the masked video may be used to determine whether or not it is a fake video, and also be used for the impersonation determination. The impersonation determining unit 617 may perform active liveness determination by using the masked video. For example, the masked video may be a video that depicts an action performed by the target person in response to the instruction from the masking instruction unit 5113. The masking instruction unit 5113 may give instructions on an action of hiding the landmarks. The masking instruction unit 5113 may also give instructions on the direction of a face, the direction of a line of sight, or the position of the face. The masking instruction unit 5113 may guide the line of sight. The masking instruction unit 5113 may give instructions on a gesture. The impersonation determining unit 617 may determine whether or not the target person performs a masking action following the instructions. The step S61 may correspond to the step 4 in an example of the eKYC flow described above.

The detection unit 213 detects the distortion in the masked video (step S22). The determination unit 214 determines whether or not the degree of distortion in the masked video is greater than or equal to a predetermined level (step S23). When the degree of distortion in the masked video is greater than or equal to the predetermined level, the determination unit 214 determines that the acquired masked video is a fake video (step S24). When the degree of distortion in the masked video is less than the predetermined level, the determination unit 214 determines that the acquired masked video is a real video (step S25).

When the determination unit 214 determines that the masked video is not a fake video, the authentication unit 618 authenticates the target person, based on a verification result obtained by the verification unit 616 and a determination result obtained by the impersonation determining unit 617 (step S62). In addition, the authentication unit 618 may authenticate the target person, on the condition that the determination unit 214 determines that the degree of distortion in the masked video is less than the predetermined level and that the impersonation determining unit 617 determines that the target person performs the masking action following the instructions. A case where the authentication of the target person by the authentication unit 618 is successful, may be a case where the identity of the target person may be verified. The step S62 may correspond to the step 5 in an example of the eKYC flow described above.

Note that an impersonation determining operation in the step S61 and a fake video determining operation from the step S22 to the step S25, which are after the verification operation in the step S60, may be performed in parallel.

### [6-4: Technical Effect of Information Processing System 6]

Since the information processing system 6 in the sixth example embodiment determines whether or not the masked video is a fake video, it is possible to accurately perform identity verification.

### [7: Supplementary Notes]

With respect to the example embodiments described above, the following Supplementary Notes are further disclosed.

### [Supplementary Note 1]

An information processing apparatus including:
a masking unit that masks at least a part of a target between the target and an image capture unit that captures images of the target;
an acquisition unit that acquires a masked video in which at least a part of the target is masked by the masking unit;
a detection unit that detects distortion in the masked video; and
a determination unit that determines whether or not the masked video is a synthesized video, based on a detection result of the detection unit.

### [Supplementary Note 2]

The information processing apparatus according to Supplementary Note 1, wherein the masking unit masks a part including landmarks of the target.

### [Supplementary Note 3]

The information processing apparatus according to Supplementary Note 1 or 2, wherein
the information processing apparatus includes the image capture unit, and
the masking unit appears a masking object that masks at least a part of the target person to appear between the target person and the image capture unit.

### [Supplementary Note 4]

The information processing apparatus according to Supplementary Note 3, wherein the masking unit masks an area masked by the masking object to be different in each of video frames that constitutes the masked video.

### [Supplementary Note 5]

The information processing apparatus according to Supplementary Note 1 or 2, wherein the masking unit instructs the target to perform an action of masking at least a part of the target.

### [Supplementary Note 6]

An information processing system including:
an information processing apparatus, including:
   a masking unit that masks at least a part of a target between the target and an image capture unit that captures images of the target;
   an acquisition unit that acquires a masked video in which at least a part of the target is masked by the masking unit;
   a detection unit that detects distortion in the masked video; and
   a determination unit that determines whether or not the masked video is a synthesized video, based on a detection result of the detection unit;
a verification unit that verifies the masked video;
an impersonation determining unit that determines whether or not the target is impersonating someone else, by using the masked video; and
an authentication unit that authenticates the target, based on at least one of a determination result of the determination unit, a determination result of the impersonation determining unit, and a verification result of the verification unit.

### [Supplementary Note 7]

An information processing method including:
masking at least a part of a target between the target and an image capture unit that captures images of the target;
acquiring a masked video in which at least a part of the target is masked;
detecting distortion in the masked video; and
determining whether or not the masked video is a synthesized video, based on a detection result.

### [Supplementary Note 8]

A recording medium on which a computer program that allows a computer to execute an information processing method is recorded, the information processing method including:
masking at least a part of a target between the target and an image capture unit that captures images of the target;
acquiring a masked video in which at least a part of the target is masked;
detecting distortion in the masked video; and
determining whether or not the masked video is a synthesized video, based on a detection result.

The present disclosure is allowed to be changed, if desired, without departing from the essence or spirit of this disclosure which can be read from the claims and the entire specification. An information processing apparatus, an information processing system, an information processing method, and a recording medium with such changes are also intended to be within the technical scope of the present disclosure.

### Description of Reference Codes

1, 2, 3, 4, 5: Information processing apparatus
6: Information processing system
11, 211, 311, 411, 511 Masking unit
12, 212, 312, 512 Acquisition unit
13, 213 Detection unit
14, 214 Determination unit
3111 Masking control unit
315 Image capture control unit
5112 Image capture instruction unit
5113 Masking instruction unit
616: Verification unit
617: Impersonation determining unit
618: Authentication unit

## Claims

1. An information processing apparatus comprising:
a masking unit that masks at least a part of a target between the target and an image capture unit that captures images of the target;
an acquisition unit that acquires a masked video in which at least a part of the target is masked by the masking unit;
a detection unit that detects distortion in the masked video; and
a determination unit that determines whether or not the masked video is a synthesized video, based on a detection result of the detection unit.

2. The information processing apparatus according to claim 1, wherein the masking unit masks a part including landmarks of the target.

3. The information processing apparatus according to claim 1 or 2, wherein
the information processing apparatus comprises the image capture unit, and
the masking unit appears a masking object that masks at least a part of the target person between the target person and the image capture unit.

4. The information processing apparatus according to claim 3, wherein the masking unit masks an area masked by the masking object to be different in each of video frames that constitutes the masked video.

5. The information processing apparatus according to claim 1 or 2, wherein the masking unit instructs the target to perform an action of masking at least a part of the target.

6. An information processing system comprising:
an information processing apparatus, including:
a masking unit that masks at least a part of a target between the target and an image capture unit that captures images of the target;
an acquisition unit that acquires a masked video in which at least a part of the target is masked by the masking unit;
a detection unit that detects distortion in the masked video; and
a determination unit that determines whether or not the masked video is a synthesized video, based on a detection result of the detection unit;
a verification unit that verifies the masked video;
an impersonation determining unit that determines whether or not the target is impersonating someone else, by using the masked video; and
an authentication unit that authenticates the target, based on at least one of a determination result of the determination unit, a determination result of the impersonation determining unit, and a verification result of the verification unit.

7. An information processing method comprising:
masking at least a part of a target between the target and an image capture unit that captures images of the target;
acquiring a masked video in which at least a part of the target is masked;
detecting distortion in the masked video; and
determining whether or not the masked video is a synthesized video, based on a detection result.

8. A recording medium on which a computer program that allows a computer to execute an information processing method is recorded, the information processing method including:
masking at least a part of a target between the target and an image capture unit that captures images of the target;
acquiring a masked video in which at least a part of the target is masked;
detecting distortion in the masked video; and
determining whether or not the masked video is a synthesized video, based on a detection result.
